# EUROPEAN PATENT SPECIFICATION

(11) **EP 0 378 075 B1**
(45) Date of publication and mention of the grant of the patent: **27.04.1994**
(21) Application number: 90100042.2
(22) Date of filing: 02.01.1990
(51) Int. Cl.: H02P 9/30

(54) **Control device for vehicle A.C. generator**
Regelvorrichtung für einen Fahrzeugwechselstromgenerator
Appareil de commande pour un alternateur de véhicule

(30) Priority: 09.01.1989 JP 2536/89
(43) Date of publication of application: 18.07.1990
(73) Proprietor: MITSUBISHI DENKI KABUSHIKI KAISHA, Tokyo 100 (JP)
(72) Inventor: Itoh, Kenji Mitsubishi Denki Kabushiki Kaisha, Himeji-shi Hyogo, 670 (JP)
(74) Representative: Strehl Schübel-Hopf Groening & Partner

(56) References cited:
- EP-A- 0 106 539
- EP-A- 0 201 243
- EP-A- 0 289 608
- DE-A- 2 933 462
- US-A- 4 346 337

## Description

### 1. Field of the invention

This invention relates to a control for a venicle generator and more particularly to a load response control device for an alternating current (AC) generator to be installed in a motor vehicle carrying a battery.

### 2. Description of the prior art

In a prior art control device for a motor vehicle alternating current generator (EP-A-0 289 608), the output voltage of the generator or the voltage across a vehicle battery is divided by utilizing a voltage divider made up of resistors and the like and a divided voltage is compared with an output voltage of a standard voltage generator which consists of a zener diode and the like for generating a control signal. The output voltage of the generator is then regulated to keep a required value by switching a switching element connected in series with a field coil of the generator for controlling a field current that flows therethrough based on the detected control signal. That is, if the output voltage of the generator is higher than the set voltage, the switching element is turned off for decreasing the field current whilst if it is lower than the set voltage, the switching element is turned on for increasing the field current, whereby the output voltage of the generator is maintained at the set voltage. In a control device of the type as described above, there is provided a continuous change of field current to follow up, with a time constant of the field coil (approximately 100 msec), a fluctuation of the required field current of the generator being caused by a fluctuation of an electric load and the like, and a stabilized control of the battery voltage is attained through such excellent response.

However, in the prior art system, because of such excellent response, an output current of the generator may change abruptly in a fluctuation period of an electric load and may cause an abrupt change in driving torque (power). This in turn results in a problem of causing a change of rotary speed of an engine, especially, in a range of idling of the engine whereby the driving power of the engine is decreased to a great extent. Therefore, a reciprocal increase of driving torque of the generator under such condition may cause serious problems.

A control device for a motor vehicle alternating current generator, which has the features included in the first part of claim 1, is known from EP-A-0 106 539. In the known device, the generator output voltage is sensed, and a sudden decrease of a predetermined magnitude is used to select a time period over which the field current is gradually increased. The time periods are determined by discharging capacitors.

EP-A-0 201 243 discloses another control system for an engine driven alternating current generator in which the field current is switched on and off to maintain the output voltage at a given value. To avoid sudden excessive loads on the engine, a controller compares the ON interval of the field current at that time with a previous value and additionally interrupts the field current when the result of the comparison exceeds a predetermined amount.

### SUMMARY OF THE INVENTION

It is an object of the present invention to control a motor vehicle alternating current generator in such a way that fluctuations in the engine speed due to abrupt changes in the load are more smoothly eliminated.

This object is met by the device defined in claim 1.

### BRIEF DESCRIPTION OF THE DRAWING

FIG. 1 is a schematic circuit diagram of a control device illustrating an embodiment of this invention;
FIG. 2 is a timing diagram showing the waveforms at the various parts of the embodiment of this invention shown in FIG. 1; and
FIG. 3 is a timing diagram showing the characteristic curves illustrating the difference between the characteristics of the control devices in accordance with this invention and the prior art

### DESCRIPTION OF THE PREFERRED EMBODIMENT

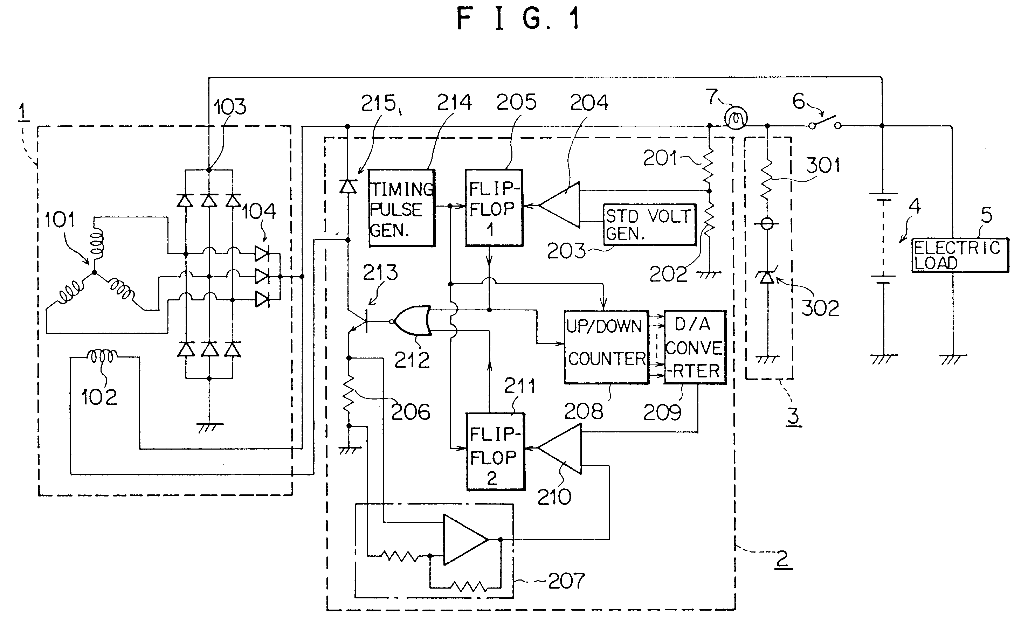

A preferred embodiment of the invention will now be descibed more in detail with reference to the accompanying drawings. Referring to FIG. 1, there is shown a schematic circuit diagram of the control device made in accordance with the present invention, thereby, an alternating current generator 1 comprises armature coils 101, a field coil 102, a main rectifier 103 to perform three-phase full-wave rectification of the three-phase output generated at the armature coils 101, and an auxiliary rectifier 104 primarily for supplying a field current. A field current limiting unit is designated by numeral 2 and there comprised are a voltage divider consisted of resistors 201, 202 for dividing the output voltage of the auxiliary rectifier 104, a standard voltage generator 203 and a first comparator 204 for detecting the output of the generator 1, a first flip-flop circuit 205 for accepting the output of the first comparator 204 and being connected to an input terminal of a NOR gate 212 and that of an UP/DOWN count switching input terminal of an UP/DOWN counter 208, a field current detecting resistor 206 for generating a voltage which is proportional to the field current, and a non-inverting amplifier 207 for amplifying a low voltage level at the field current detecting resistor 206 to a predetermined voltage level for detecting the field current. The UP/DOWN counter 208 has its UP/DOWN counting operation determined by the output of the first flip-flop circuit 205 and provides a counted value as a certain number of bits. Further, in the field current limiting unit 2, there are comprised a D/A converter 209 for providing an output which is proportional to the counted value of the UP/DOWN counter 208, a second comparator 210 for comparing the output of the D/A converter 209 with the output of the non-inverting amplifier 207, and a second flip-flop circuit 211 for accepting the output of the second comparator 210. The NOR gate 212 performs an inclusive-OR operation or logical sum of the outputs of the first flip-flop circuit 205 and the second flip-flop circuit 211 and controls the conduction of power transistor 213 which interrupts the field current. The numeral 214 designates a timing pulse generator which generates one shot pulses with a predetermined period for providing timing operations of the first flip-flop circuit 205, the second flip-flop circuit 211 and the UP/DOWN counter 208. The numeral 215 designates a suppression diode for absorbing a surge voltage generated when the power transistor is turned off. The numeral 3 designates a voltage regulation circuit consisting of a resistor 301 and a zener diode 302 for supplying electric power to the field current control unit 2. The numeral 4 designates a battery and the numeral 5 designates an electric load. The numeral 6 is a key switch and the numeral 7 is a warning lamp for charging.

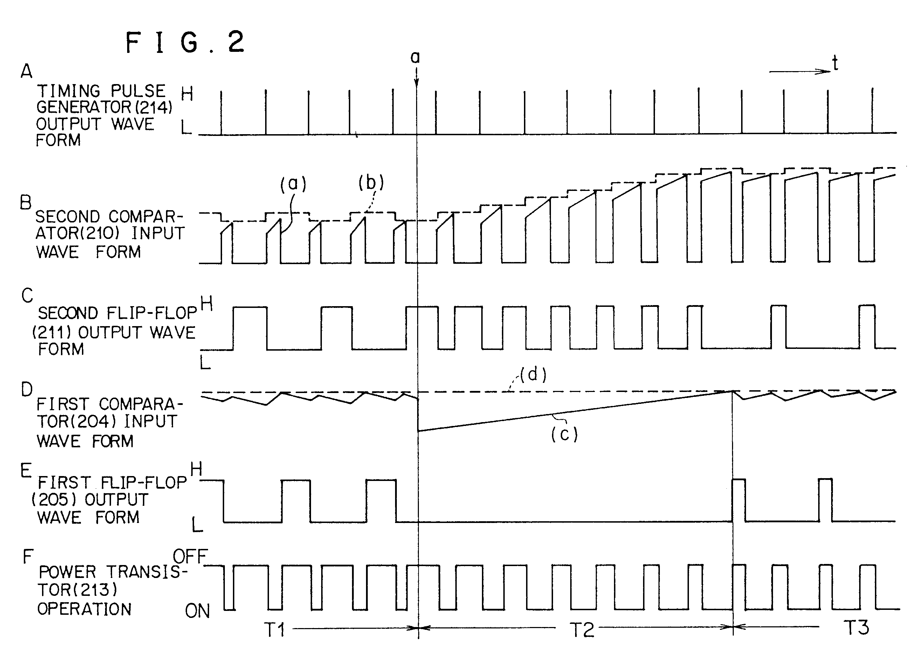

FIG.2 is a timing diagram showing the wave forms at the various parts of the embodiment of the invention for illustrating the operation thereof. In FIG. 2, the letter A designates the output waveform of one shot pulses generated at the timing pulse generator 214 and the letter B designates the input waveforms to the second comparator 210 for limiting the field current, wherein (a) shows the output waveform of the non-inverting amplifier 207 proportioned to the field current whilst (b) shows the output waveform of the D/A converter 209. The letter C designates the output waveform of the second flip-flop circuit 211 and the letter D designates the input waveforms to the first comparator 204 for detecting the output voltage of the generator 1, wherein (c) shows the voltage at the junction of the dividing resistors 201, 202 which divide the output voltage of the generator 1 whilst (d) shows the waveform of the standard voltage generated at the standard voltage generator 203. The letter E designates the output waveform of the first flip-flop circuit 205 and the letter F designates the output waveform of the power transistor 213. Further, in FIG. 2, the period T1 designates a steady-state voltage control period wherein the field current is stable, the period T2 designates a transition period wherein the field current is increasing, the period T3 designates a steady-state voltage control period after the field current has been increased, and the point "a" designates the start point of increasing required field current.

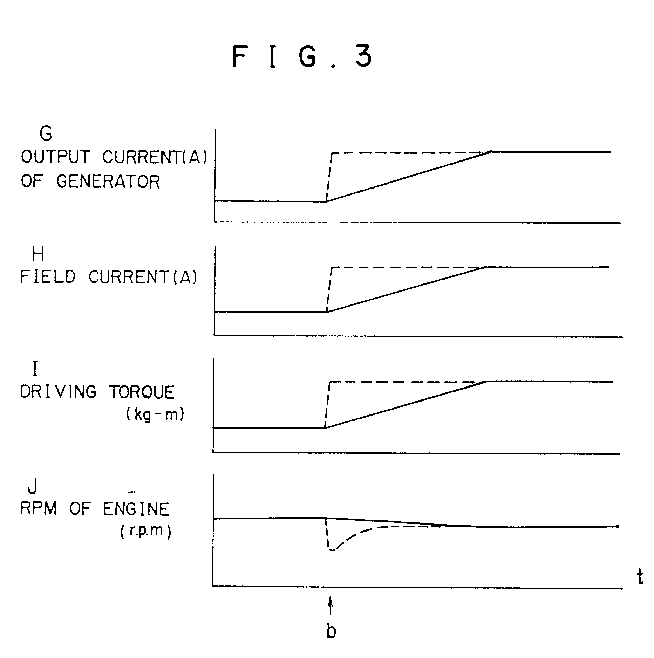

FIG. 3 illustrates the characteristics of the embodiment of this invention when an electric load is applied, wherein the letter G designates the output current wave form of the generator 1 the letter H designates the field current waveform, the letter I designates the driving torque of the generator 1 and the letter J designates a variation of the rotating speed of the engine. Further, in FIG. 3, the solid line shows the characteristics of the preferred embodiment of this invention, the interrupted line shows the characteristics of the prior art system and the point "b" designates the time when the electric load is applied.

The operation the preferred embodiment of this invention will now be described more in detail. When the engine is started and the generator 1 is in the state of generating voltage, the output voltage of the generator 1 and the field current are detected within one period of the one-shot pulse output (shown in FIG. 2 A) of the timing pulse generator 214. Firstly, the first and the second flip-flop circuits 205, 211 are set to an "L" level by the first one-shot pulse and in turn the power transistor 213 is brought into conduction through the NOR gate 212. The output of the generator 1 is detected continuously by means of the voltage detector comprised of the dividing resistors 201, 202, the standard voltage generator 203 and the first comparator 204. Secondly, the field current detection by the field current detecting resistor 206 is commenced with the conduction of the power transistor 213. The detected field current, after being amplified by the non-inverting amplifier 207, is compared at the second comparator 210 with the output of the D/A converter 209, which determines the limiting value of the field current, for deriving a compared output therefrom. Under such condition as described above, if a voltage at a junction of the dividing resistors 201, 202, which is a divided output voltage of the generator 1, exceeds the preset voltage of the standard voltage generator 203, the output of the first comparator 204 is inverted and then the first flip-flop circuit 205 is flipped from a "L" level to a "H" level whilst the second flip-flop circuit 211 is flipped from a "L" level to a "H" level when an output of the non-inverting amplifier 207, which is proportional to the field current, exceeds the output of the D/A converter 209. The NOR gate 212 detects the change of level from the "L" level to the "H" level caused at either of the first and secong flip-flop circuits 205, 211 and turns off the conduction of the power transistor 213. The power transistor 213 is kept off until the arrival of next timing pulse. Since the output of the first flip-flop circuit 205 is fed continuously to the UP/DOWN counter 208, if the output level is changed from the "L" level to the "H" level within one period of the timing pulses, there is executed the down counting from the next timing pulse and then a certain amount of value is decreased from the output of the D/A converter 209. On the other hand, if the output level is remained at the "L" level, there is executed the up counting and then a certain amount of value is added to the output of the D/A converter 209.

As it has been described above, in accordance with the preferred embodiment of this invention, by providing a feed back loop for varying the limiting value of the field current successively depending upon the state of the output voltage within one period of the timing pulses, the steady-state voltage control operation at which the required field current of the generator 1 is constant will become an alternate turn off operation of the power transistor 213 through the detection of the output voltage (through the first flip-flop circuit 205) and through the detection of the field current (through the second flip-flop circuit 211). Further, since the amount of change in counting at the UP/DOWN counter 208 is so selected as to increase or decrease the output of the D/A converter 209 successively, there is provided a stable output voltage whereby the limiting value for the field current is substantially balanced with the required field current.

When the required field current is increased from that of the aforesaid steady-state voltage control operation (FIG. 2 point "a"), the output of the generator 1 will drop instantly and then the output of the first flip-flop circuit 205 will be kept at low "L" level. Therefore, the UP/DOWN counter 208 is changed to the state of up-counting, increasing the output of the D/A converter 209 or increasing the field current limiting value. The rise time of the field current being caused by the increase of the output voltage of the D/A converter 209 is selected to be longer than the time constant of the field coil 102, so that the field current limiting value at the time when the required field current, which is balanced with the value of field current hereunto (FIG. 2 period T1), is now increased gradually in the period of T2, which is the period for increasing the field current, under the control of successive field current limiting operation. Hence, upon reaching the required amount of field current and the set voltage for the output of the generator 1, there is provided again a steady-state voltage control operation which is similar to that of the period T1 and an output voltage is maintained constant (FIG. 2 period T3).

As it is shown by the solid line in FIG. 3, the increasing of the field current in accordance with the preferred embodiment of the invention (FIG. 3 H) is much slower than in the prior art system (shown by interrupted line in FIG. 3 H). As the field current, the output current and the driving torque of the generator 1 at constant rotary speed are proportional each other, the output current and the driving torque of the generator 1 have characteristics similar to that of the field current, as shown by solid lines in FIG. 3 G, I respectively. Because of the gradual increase of the driving torque, abrupt change of rotation of the engine is perfectly suppressed, as it is clear from the FIG. 3 J.

## Claims

1. A control device for a motor vehicle alternating current generator, including
voltage detecting means (201, 202) for detecting the output voltage of the engine-driven alternating current generator (1),
voltage control means (204, 205) for controlling a switching element (213) which switches the field current of the alternating current generator (1) in response to a voltage comparing signal which is obtained by comparing the output of the voltage detecting means (201, 202) with a standard voltage (203),
field current detecting means (206) for detecting the field current, and
field current limiting means (210, 211) for controlling the switching element (213) in response to a signal which is obtained by comparing the output of the field current detecting means (206) with a field current limiting value,
characterized by field current limiting value control means (208, 209) including an UP/DOWN counter (208), which counts predetermined clock pulses and the counting direction of which is controlled by the voltage comparing signal and a D/A converter (209) connected to the output of the UP/DOWN counter (208) for providing a field current limiting value that varies successively in response to the voltage comparing signal in that the field current limiting value is decreased when the voltage comparing signal has changed its output level to indicate a voltage above the standard voltage between two consecutive clock pulses, and is increased when it has not changed.

2. The device of claim 1, wherein said field current detecting means includes a resistor (206) connected in series with a field coil (102) of the alternating current generator (1).

3. The device of claim 1 or 2, wherein said field current limiting means includes a comparator (210) and a flip-flop circuit (211) to apply a pulse-width modulated control signal to the switching element (213).

4. The device of any one of claims 1 to 3, wherein the switching element (213) is switched off by either one of the outputs of said voltage control means (204, 205) and said field current limiting means (210, 211).

5. The device of any one of claims 1 to 4, wherein said switching element (213) is a power transistor.

6. The device of claim 2, wherein the voltage across said field current detecting resistor (206) is fed to a non-inverting amplifier (207) for deriving said output which is compared with the field current limiting value.

## Patentansprüche

1. Regelvorrichtung für einen Kraftfahrzeug-Wechselstromgenerator umfassend
eine Spannungserfassungeinrichtung (201, 202) zur Erfassung der Ausgangsspannung des motorgetriebenen Wechselstromgenerators (1),
eine Spannungsregeleinrichtung (204, 205) zur Regelung eines Schaltelements (213), das den Feldstrom des Wechselstromgenerators (1) in Reaktion auf ein durch Vergleich des Ausgangs der Spannungserfassungeinrichtung (201, 202) mit einer Standardspannung (203) erhaltenes Spannungsvergleichssignal schaltet,
einer Feldstrom-Erfassungseinrichtung (206) zur Erfassung des Feldstromes, und
einer Feldstrom-Begrenzungseinrichtung (210, 211) zur Regelung des Schaltelements (213) in Reaktion auf ein Signal, das durch Vergleich des Ausgangs der Feldstrom-Erfassungseinrichtung (206) mit einem Feldstrom-Begrenzungswert erhalten wird,
gekennzeichnet durch eine Feldstrom-Begrenzungswert-Steuereinrichtung (208, 209), die einen Aufwärts/Abwärts-Zähler (208), der vorgegebene Taktimpulse zählt und dessen Zählrichtung durch das Spannungsvergleichssignal gesteuert wird, und einen D/A-Wandler (209) umfaßt, der mit dem Ausgang des Aufwärts/Abwärts-Zählers (208) verbunden ist, um einen Feldstrom-Begrenzungswert bereitzustellen, der sich laufend in Reaktion auf das Spannungsvergleichssignal ändert, wobei der Feldstrom-Begrenzungswert vermindert wird, wenn das Spannungsvergleichssignal seinen Ausgangspegel geändert hat, um eine Spannung über der Standardspannung zwischen zwei aufeinanderfolgenden Taktimpulsen anzuzeigen, und erhöht wird, wenn dieses sich nicht geändert hat.

2. Vorrichtung nach Anspruch 1, wobei die Feldstrom-Erfassungseinrichtung einen Widerstand (206) umfaßt, der mit einer Feldspule (102) des Wechselstromgenerators (1) in Reihe geschaltet ist.

3. Vorrichtung nach Anspruch 1 oder 2, wobei die Feldstrom-Begrenzungseinrichtung einen Komparator (210) und eine Flip-Flop-Schaltung (211) umfaßt, um ein pulsweitenmoduliertes Regelsignal an das Schaltelement (213) zu liefern.

4. Vorrichtung nach einem der Ansprüche 1 bis 3, wobei das Schaltelement (213) entweder von den Ausgängen der Spannungsregeleinrichtung (204, 205) oder der Feldstrom-Begrenzungseinrichtung (210, 211) ausgeschaltet wird.

5. Vorrichtung nach einem der Ansprüche 1 bis 4, wobei das Schaltelement (213) ein Leistungstransistor ist.

6. Vorrichtung nach Anspruch 2, wobei die Spannung über dem Feldstromerfassungswiderstand (206) einem nicht invertierenden Verstärker (207) zur Bildung des Ausgangssignals zugeführt wird, welches mit dem Feldstrom-Begrenzungswert verglichen wird.

## Revendications

1. Dispositif de commande pour un générateur de courant alternatif d'un véhicule à moteur comprenant :
des dispositifs de détection de tension (201, 202) pour détecter la tension de sortie du générateur de courant alternatif (1) entraîné par un moteur,
des dispositifs de commande de tension (204, 205) pour commander un élément de commutation (213) qui commute le courant d'excitation du générateur de courant alternatif (1) en réponse à un signal de comparaison de tension qui est obtenue en comparant la sortie des dispositifs de détection de tension (201, 202) avec une tension standard (203),
des dispositifs de détection de courant d'excitation (206) pour détecter le courant d'excitation, et
des dispositifs limitant le courant d'excitation (210, 211) pour commander l'élément de commutation (213) en réponse à un signal qui est obtenu en comparant la sortie des dispositifs de détection du courant d'excitation (206) avec une valeur limite du courant d'excitation,
caractérisé par des dispositifs de commande de valeur limite du courant d'excitation (208, 209) comprenant un compteur progressif/régressif (208), qui compte des impulsions d'horloge prédéterminées et dont la direction de comptage est commandée par le signal de comparaison de tension, et un convertisseur numérique-analogique (209) connecté à la sortie du compteur progressif/régressif (208) pour fournir une valeur limite du courant d'excitation qui varie successivement en réponse au signal de comparaison de tension en ce sens que la valeur limite du courant d'excitation est diminué lorsque le signal de comparaison de tension a changé son niveau de sortie pour indiquer une tension supérieure à la tension standard entre deux impulsions d'horloge consécutives, et est augmenté quand elle n'a pas changé.

2. Dispositif selon la revendication 1, dans lequel lesdits dispositifs détectant le courant d'excitation comprennent une résistance (206) connectée en série avec une bobine d'excitation (102) du générateur de courant alternatif (1).

3. Dispositif selon la revendication 1 ou 2, dans lequel lesdits dispositifs limitant le courant d'excitation comprennent un comparateur (210) et une bascule (211) pour appliquer un signal de commande modulé en largeur d'impulsions à l'élément de commutation (213).

4. Dispositif selon l'une quelconque des revendications 1 à 3, dans lequel l'élément de commutation (213) est bloqué par un quelconque des signaux de sortie desdits dispositifs de commande de tension (204, 205) et lesdits dispositifs limitant le courant d'excitation (210, 211).

5. Dispositif selon l'une quelconque des revendications 1 à 4, dans lequel ledit élément de commutation (213) est un transistor de puissance.

6. Dispositif selon la revendication 2, dans lequel la tension à travers ladite résistance de détection du courant d'excitation (206) est appliquée à un amplificateur non inversant (207) pour dériver ledit signal de sortie qui est comparé avec la valeur limite du courant d'excitation.
